# EUROPEAN PATENT APPLICATION

(11) **EP 4 687 042 A1**
(43) Date of publication of application: **04.02.2026**
(21) Application number: 25192993.1
(22) Date of filing: 31.07.2025
(51) Int. Cl.: G06F 12/0895

(54) **CONFIGURABLE PARTITIONING OF WRITE COMBINE BUFFERS**

(30) Priority: 02.08.2024 GB 202411417
(71) Applicant: Imagination Technologies Limited, Kings Langley Hertfordshire WD4 8LZ (GB)
(72) Inventor: ANANTHARAMU, Abhiram, Kings Langley, WD4 8LZ (GB)
(74) Representative: Page White Farrer

(57) **Abstract**

There is provided a processor comprising: a data buffer, the data buffer being configured as a write-combine buffer. The processor further comprising logic circuitry which is configured to perform: receiving, from a further entity, an input data stream for a write operation, wherein the input data stream is received in blocks of data, and partitioning the data buffer into partitions, wherein the partitioning is based on a size of the blocks of data that are received. The logic circuitry further configured to perform: writing each of the blocks of data to one of the partitions, each block of data being written to a partition of the data buffer based on an address associated with the respective block of data, and for each of the partitions, determining whether to initiate a draining of the respective partition to further memory based on the data that is stored in the respective partition.

## Description

### CROSS-REFERENCE TO RELATED APPLICATION

This application claims priority from UK patent application GB2411417.5 filed on 2 August 2024, which is herein incorporated by reference in its entirety.

### TECHNICAL FIELD

The present disclosure is related to a processor, and a method for a processor. In particular, the partitioning of write combine buffers by a processor.

### BACKGROUND

A given processor will comprise execution logic which is configured to recognize a certain predefined instruction set. The instruction set is the fundamental set of definitions of the types of machine code instruction which the processor is configured to recognize and execute. Each type of instruction in the instruction set is defined by its opcode, which specifies the type of operation to be performed.

A memory management unit of a processor is used to translate logical addresses into physical random access memory address, as well as to provide memory protection and paging abilities. A processor typically comprises a hardware cache, which is used by the processor to reduce the average cost to access data from a main memory. A cache is smaller in size than the main memory, but due to its close proximity to the processor core, is faster. Many processors will have different caches that are independent to one another, including data caches and instructions caches, whereby the data cache is usually organized in cache levels (e.g., level-1 (L1), L2, etc.). One or more buffers may also be present in a processor, which are configured to temporarily hold data before the data is written to further memory (e.g., into a cache of the processor).

### SUMMARY

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

There is provided a processor comprising: a data buffer, the data buffer being configured as a write-combine buffer. The processor further comprising logic circuitry which is configured to perform: receiving, from a further entity, an input data stream for a write operation, wherein the input data stream is received in blocks of data, and partitioning the data buffer into partitions, wherein the partitioning is based on a size of the blocks of data that are received. The logic circuitry further configured to perform: writing each of the blocks of data to one of the partitions, each block of data being written to a partition of the data buffer based on an address associated with the respective block of data, and for each of the partitions, determining whether to initiate a draining of the respective partition to further memory based on the data that is stored in the respective partition.

According to an aspect, there is provided a processor comprising: a data buffer, the data buffer being configured as a write-combine buffer; logic circuitry configured to perform: receiving, from a further entity, an input data stream for a write operation, wherein the input data stream is received in blocks of data; partitioning the data buffer into partitions, wherein the partitioning is based on a size of the blocks of data that are received; writing each of the blocks of data to one of the partitions, each block of data being written to a partition of the data buffer based on an address associated with the respective block of data; and for each of the partitions, determining whether to initiate a draining of the respective partition to further memory based on the data that is stored in the respective partition.

In some examples, the data buffer has a fixed size in memory and is implemented in hardware of the processor, wherein the data buffer is associated with an address, and wherein, following the partitioning, each of the partitions of the data buffer are associated with different addresses.

In some examples, the logic circuitry is further configured to perform: based on the determining, initiating a draining of the respective partition to the further memory.

In some examples, the input data stream comprises an idempotent store of data, wherein the idempotent store of data is un-cacheable.

In some examples, the partitioning is based on a maximum size of the blocks of data that are received.

In some examples, a size of the partitions in the data buffer is configured to match the maximum size of the blocks of data that are received.

In some examples, the processor further comprises: execution logic circuitry comprising one or more execution units for running software, wherein the software: detects the maximum size of the blocks of data in the input data stream, and sends an indication of the maximum size to the logic circuitry, wherein the logic circuitry is configured to use the indication to partition the data buffer.

In some examples, the logic circuitry is configured to perform: identifying a flag that is comprised within the input data stream that indicates the maximum size of the blocks of data, wherein the logic circuitry is configured to use the flag to partition the data buffer.

In some examples, the logic circuitry is configured to perform: draining one of the partitions to further memory in response to the one of the partitions being filled with data.

In some examples, the logic circuitry is configured to perform: draining one of the partitions to further memory in response to a time-out expiring for the one of the partitions.

In some examples, the one of the partitions of the data buffer is drained to the further memory in a bus transaction in a burst mode.

In some examples, the logic circuitry is configured to dynamically change the size of the partitions, while the processor is in use, based on the size of the blocks of data that are received.

In some examples, the logic circuitry is configured to performing: merging at least two blocks of data within one of the partitions before the data in the partition is drained to the further memory.

In some examples, each of the blocks of data is written to one of the partitions in response to the logic circuitry determining that the input data stream comprises an idempotent store, wherein the determining is based on the address that is associated with the respective block of data.

In some examples, the further memory is: comprised within the processor, or external to the processor.

In some examples, the data buffer is comprised in a bus interface unit of the processor, wherein the bus interface unit is associated with a cache memory of the processor, the cache memory comprised in a level-1 memory system of the processor.

In some examples, each of the partitions is associated with an address that is different from each other, the data being written to each of the partitions in dependence on the associated address.

In some examples, the further entity is one of: an accelerator, or graphics processing unit.

According to as aspect, there is provided a method performed by a processor, the method comprising: receiving, from a further entity, an input data stream for a write operation, wherein the input data stream is received in blocks of data; partitioning a data buffer of the processor into partitions, wherein the partitioning is based on a size of the blocks of data that are received; writing each of the blocks of data to one of the partitions, each block of data being written to a partition of the data buffer based on an address associated with the respective block of data; and for each of the partitions, determining whether to initiate a draining of the respective partition to further memory based on the data that is stored in the respective partition.

In some examples, the partitioning is based on a maximum size of the blocks of data that are received.

In some examples, the method further comprises: detecting the maximum size of the blocks of data in the input data stream by communicating with the further entity about the input data stream.

In some examples, the method further comprises: identifying a flag that is comprised within the input data stream that indicates the maximum size of the blocks of data, wherein the flag is used for partitioning the data buffer.

In some examples, the method further comprises at least one of: draining one of the partitions to further memory in response to the one of the partitions being filled with data; or draining one of the partitions to further memory in response to a time-out expiring for the one of the partitions.

In some examples, the method further comprises: based on the determining, initiating a draining of the respective partition to the further memory.

In some examples, the draining of the one of the partitions of the data buffer to the further memory is in a bus transaction in a burst mode.

In some examples, the method further comprises: dynamically changing the size of the partitions, while the processor is in use, based on the size of the blocks of data that are received.

In some examples, the method further comprises: merging at least two blocks of data within one of the partitions before the data in the partition is drained to the further memory.

In some examples, the method further comprises: determining that the input data stream comprises an idempotent store, wherein the determining is based on the address that is associated with the respective block of data.

In some examples, the further memory is: comprised within the processor, or external to the processor.

In some examples, the data buffer is comprised in a bus interface unit of the processor, wherein the bus interface unit is associated with a cache memory of the processor, the cache memory comprised in a level-1 memory system of the processor.

In some examples, each of the partitions is associated with an address that is different from each other, the data being written to each of the partitions in dependence on the associated address.

In some examples, the further entity is one of: an accelerator, or graphics processing unit.

According to an aspect, there is provided a processor configured to perform the methods described herein.

In some examples, the processor is embodied in hardware on an integrated circuit.

According to an aspect, there is provided a method of manufacturing, using an integrated circuit manufacturing system, a processor as described herein.

According to aspect, there is provided a method of manufacturing, using an integrated circuit manufacturing system, a processor as described herein, the method comprising: processing, using a layout processing system, a computer readable description of the processor so as to generate a circuit layout description of an integrated circuit embodying the processor; and manufacturing, using an integrated circuit generation system, the processor according to the circuit layout description.

According to an aspect, there is provided a computer readable code configured to cause the methods as described herein to be performed when the code is run.

According to as aspect, there is provided a computer readable storage medium having encoded thereon the computer readable code as described herein.

According to an aspect, there is provided an integrated circuit definition dataset that, when processed in an integrated circuit manufacturing system, configures the integrated circuit manufacturing system to manufacture a processor as described herein.

According to an aspect, there is provided a non-transitory computer readable storage medium having stored thereon a computer readable description of a processor as described herein that, when processed in an integrated circuit manufacturing system, causes the integrated circuit manufacturing system to manufacture an integrated circuit embodying the processor.

According to an aspect, there is provided a non-transitory computer readable storage medium having stored thereon a computer readable description of a processor as described herein which, when processed in an integrated circuit manufacturing system, causes the integrated circuit manufacturing system to: process, using a layout processing system, the computer readable description of the processor so as to generate a circuit layout description of an integrated circuit embodying the processor; and manufacture, using an integrated circuit generation system, the processor according to the circuit layout description.

According to an aspect, there is provided an integrated circuit manufacturing system configured to manufacture a processor as described herein.

According to an aspect, there is provided an integrated circuit manufacturing system comprising:

According to an aspect, there is provided a non-transitory computer readable storage medium having stored thereon a computer readable description of a processor as described herein; a layout processing system configured to process the computer readable description so as to generate a circuit layout description of an integrated circuit embodying the processor; and an integrated circuit generation system configured to manufacture the processor according to the circuit layout description.

In some examples, the integrated circuit manufacturing system further comprises: a layout processing system configured to determine positional information for logical components of a circuit derived from the integrated circuit description so as to generate a circuit layout description of an integrated circuit embodying the processor.

The processor may be embodied in hardware on an integrated circuit. There may be provided a method of manufacturing, at an integrated circuit manufacturing system, a processor. There may be provided an integrated circuit definition dataset that, when processed in an integrated circuit manufacturing system, configures the system to manufacture a processor. There may be provided a non-transitory computer readable storage medium having stored thereon a computer readable description of a processor that, when processed in an integrated circuit manufacturing system, causes the integrated circuit manufacturing system to manufacture an integrated circuit embodying a processor.

There may be provided an integrated circuit manufacturing system comprising: a non-transitory computer readable storage medium having stored thereon a computer readable description of the processor; a layout processing system configured to process the computer readable description so as to generate a circuit layout description of an integrated circuit embodying the processor; and an integrated circuit generation system configured to manufacture the processor according to the circuit layout description. The layout processing system may be configured to determine positional information for logical components of a circuit derived from the integrated circuit description so as to generate the circuit layout description of the integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a schematic representation of a processor that comprises a memory system with a write combine buffer;
Figure 2 shows a schematic representation of data buffers which are comprised in a processor;
Figure 3 shows a schematic representation of the filling of the buffers of Figure 2 with data over time;
Figure 4 shows a schematic representation of data buffers which are comprised in a processor, wherein the buffers have been partitioned;
Figure 5 shows a schematic representation of the filling of the first buffer of Figure 4 with data over time;
Figure 6 shows an example method performed by a processor;
Figure 7 shows a computer system in which processing systems described herein may be implemented; and
Figure 8 shows an example of an integrated circuit (IC) manufacturing system which is configured to manufacture a processor.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

A processor (such as a central processing unit (CPU)) often comprises one or more buffers as part of a memory system of the processor. A buffer (also referred to as a 'data buffer') is an area (or region) of memory that is used to temporarily hold data when the data is being moved from one place to another. For example, a buffer may be utilised when moving data between locations in a computing system. Buffers may be implemented in a fixed memory location in hardware (HW), or by using a virtual data buffer in software (SW) that points at a location in the physical memory. Whether implemented using HW or SW, the data that is stored in a buffer is stored on some sort of physical storage medium.

Write combining (WC) is a computer bus technique that is implemented to allow data to be combined while being temporarily stored in a buffer. The buffer being used for WC may be termed a WC buffer (WCB), although any suitable name may be used. Once the data has been written to the buffer and potentially combined with other data, then the data in the WC buffer is drained (or released) together in a burst mode transaction. This contrasts the writing (immediately) of smaller chunks of data, which may be over single-mode. A burst mode transaction is when the data is transmitted repeatedly without going through all of the steps to transmit each piece of data in separate transactions. Due to this, a burst mode transaction is often faster than multiple single mode transactions.

WC is often not suitable for general memory access because of the weak ordering. This means that the WC does not provide a guarantee that write and read operations would be performed in the expected order. Once the WC buffer contents have started to be propagated to memory, the data is subject to weak ordering semantics. Ordering may not be maintained between the successive allocation/deallocation of WC buffers. For example, writes to a first WC buffer followed by writes to a second WC buffer may appear as the second buffer followed by the first buffer on the system bus. Due to this, WC is more suitable for memory for which a strong ordering is less important, such as, for example, frame buffers of graphics processing units (GPUs).

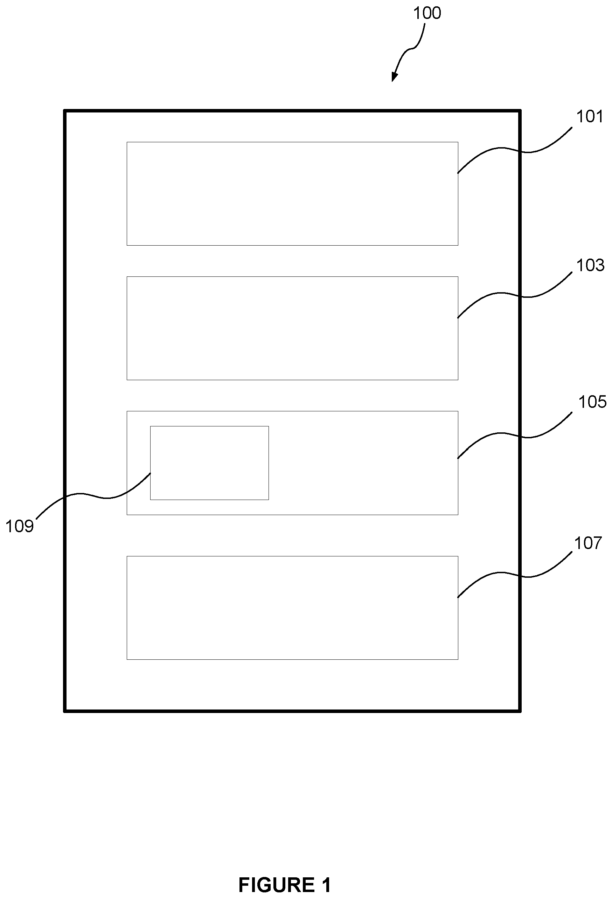

Write combining may be implemented in a processor, such as a CPU. An example processor that is suitable for implementing write combining is depicted in Figure 1.

Figure 1 shows a schematic representation of a processor that comprises a memory system with a write combine buffer.

A processor 100 (e.g., a CPU) comprises an instruction fetch unit (IFU) 101, an execution engine 103 (which may also be referred to as a data processing unit), an L1 memory system 105, and an L2 memory system 107. The L1 memory system 105 may be split into separate memory for data and instructions (e.g., L1d and L1i) (not shown). Some processors may comprise further memory, such as L3 and L4 (not shown). The L1 memory system 105 comprises L1 cache memory, and the L2 memory system comprises L2 cache memory. In Figure 1, the cache memory (e.g., the L1 and L2 cache memory) is a HW-based (or chip-based) component that may be utilised for retrieving data from the memory more efficiently. Cache memory is a temporary storage area that the processor 100 is able to retrieve data from more easily. The cache (or caches) within the cache memory is more readily available to the processor 100 than a main memory source of a device (e.g., that comprised the processor 100). For example, the main memory may be some form of dynamic random access memory (DRAM) (not shown). Cache memory may be referred to as CPU memory because it is typically integrated directly into the CPU chip. Alternatively, the cache memory may be placed on a separate chip that has a separate bus interconnect with the CPU. The HW that is used for cache memory may be high-speed static random access memory (SRAM). Cache memory is different to the term 'cache'. Caches are temporary stores of data that may exist in both HW and SW. Caches are typically used to provide data requested from a main memory more quickly than if the data had to be retrieved from the main memory itself. As such, cache usage will typically be 'transparent' to the component making the request. That is, the component will typically request data from the main memory, but caches will be used to provide that data more quickly if possible, without the component being aware that the data has come from a cache rather than the main memory. Cache memory refers to the HW component that enables computers to create caches at various levels of a system.

The L1 memory system 105 comprises a bus interface unit (BIU) 109. In the processor 100, the BIU 109 is configured to perform data and address transfers on the busses for the processor 100, such as sending addresses, fetching instructions from memory, reading data from ports and the memory, as well as writing data to the ports and the memory.

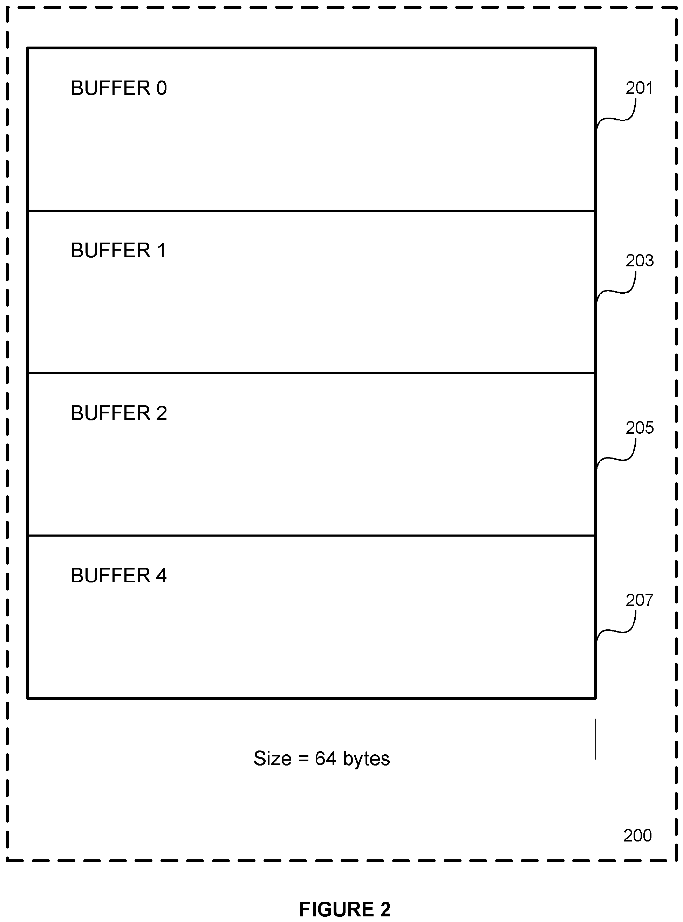

One or more data buffers (herein referred to as 'buffers') may be comprised in the BIU 109 of the L1 memory system. An example of buffers, which may be comprised in a BIU, is depicted in Figure 2.

Figure 2 shows a schematic representation of data buffers which are comprised in a processor. The (data) buffers in Figure 2 may be configured as write-combine buffers.

In this example, the processor 200 comprises four buffers including: a first buffer (labelled 'buffer 0') 201, a second buffer (labelled 'buffer 1') 203, a third buffer (labelled 'buffer 2') 205, and a fourth buffer (labelled 'buffer 3') 207. Each of the four buffers 201, 203, 205, 207 are 64 bytes in size. This may be considered to be a common size of buffer, but in other examples, a buffer may be smaller, or larger, in size. The size of 64 bytes per buffer is considered to be a fixed size.

The four buffers 201, 203, 205, 207 are located in a BIU of an L1 memory system of the processor 200. In other examples, the four buffers 201, 203, 205, 207 may be located in other memory systems of the processor 200, e.g., L2, L3, etc. When data is received by the processor 200, depending on an address associated with the data and/or the type of data, the processor 200 may utilise the four buffers 201, 203, 205, 207 to temporarily store the data, before it is sent to cache memory, or downstream (e.g., to main memory). In this context, 'downstream' is the next level of memory in the memory hierarchy. For example, idempotent data (an idempotent store), or uncacheable (non-device) data (an uncacheable non-device store) is suitable for write combining and may be inserted into one of the four buffers 201, 203, 205, 207 for merging (or combining) before being sent downstream. Both idempotent and uncacheable non-device data is not suitable for being inserted into cache memory (e.g., L1 cache memory), and would therefore be drained (or written) to downstream non-cache memory (e.g., main memory).

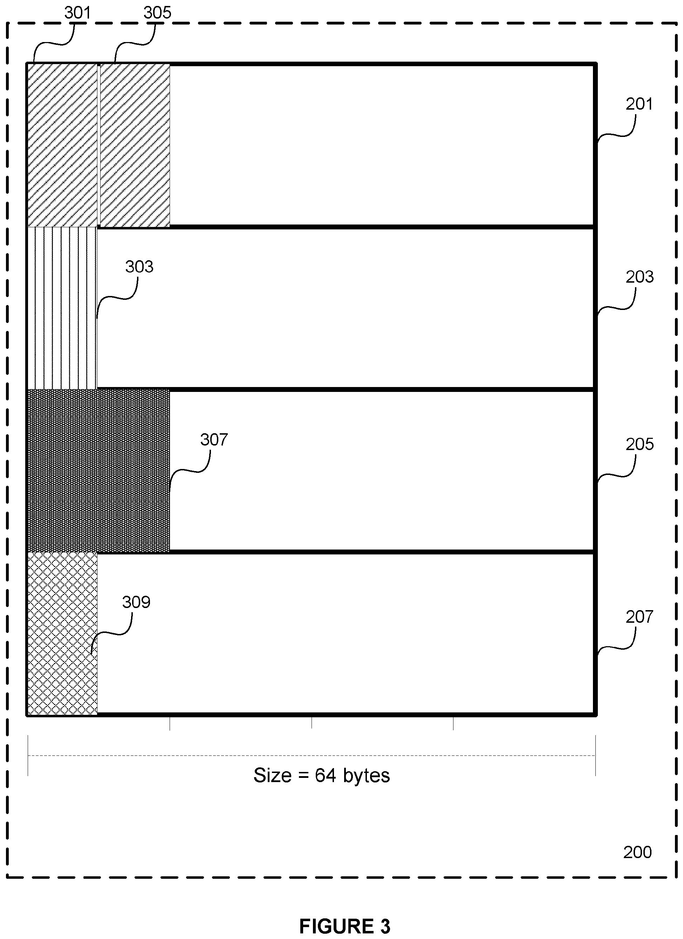

In this example, the four buffers 201, 203, 205, 207 are configured as write-combine buffers, as described above. Data that is suitable for write-combining may be inserted into any one of the four buffers 201, 203, 205, 207 by logic circuitry (not shown) of the processor 200. An example showing how the four buffers 201, 203, 205, 207 may be filled with data is depicted in Figure 3.

Figure 3 shows a schematic representation of the filling of the buffers of Figure 2 with data over time. Common labelling is used between Figures 2 and 3 for the parts that are the same.

The processor 200 may receive data from an entity that is external to the processor 200. For example, the processor 200 may receive data from an accelerator or graphics processing unit (GPU). The data being received from the external entity will be received in blocks of data. The blocks of data have a maximum size. For example, the external entity may send data to the processor 200 in blocks with a maximum size of 16 bytes, for example. Stated differently, in this example, the external entity streams output a maximum of 16 bytes of data for each cache line. It should be understood that a block of 16 bytes is an example only, and may be higher, or lower, than 16 bytes. In the context of the buffers in the processor, chunks of memory handled by the cache memory are called 'cache lines'. The size of these chunks is referred to as the 'cache line size'. Common cache line sizes are 16, 32, 64 and 128 bytes. Cache memory is able to store a limited number of lines, determined by the cache size.

At time 0 (t0), a first block of data 301 is to be inserted (or written) into one of the four buffers 201, 203, 205, 207. The first block of data 301 is associated with an address A. The first block of data 301 is 8 bytes (i.e., smaller than the maximum block size). In this example, the first buffer 201 becomes associated with address A. Therefore, the first block of data 301 is written to the first buffer 201. The first buffer 201 now comprises 8 bytes of data from the incoming store data (i.e., first block of data 301) for the corresponding cache line (i.e., for address A).

At t1, a second block of data 303 is to be inserted into one of the four buffers 201, 203, 205, 207. The second block of data 303 is associated with an address B. The second block of data 303 is 8 bytes. The second buffer 203 becomes associated with address B, and so the second block of data 303 is written to the second buffer 203. The second buffer 203 now comprises 8 bytes of data.

At t2, a third block of data 305 is to be inserted into one of the four buffers 201, 203, 205, 207. The third block of data 305 is associated with address A. The third block of data 305 is 8 bytes. The first buffer 201 is already associated with address A, and so the third block of data 305 is written to the first buffer 201. The first buffer 201 now comprises 16 bytes of data.

At t3, a fourth block of data 307 is to be inserted into one of the four buffers 201, 203, 205, 207. The fourth block of data 307 is associated with an address C. The fourth block of data 307 is 16 bytes (i.e., the maximum block size). The third buffer 205 becomes associated with address C, and so the fourth block of data 307 is written to the third buffer 205. The third buffer 205 now comprises 16 bytes of data.

At t4, a fifth block of data 309 is to be inserted into one of the four buffers 201, 203, 205, 207. The fifth block of data 309 is associated with an address D. The fifth block of data 309 is 8 bytes. The fourth buffer 207 becomes associated with address D, and so the fifth block of data 309 is written to the fourth buffer 207. The fourth buffer 207 now comprises 8 bytes of data.

When data is written to the same buffer (e.g., the first block 301 and the third block 305) the data is merged (or combined). However, it may be that the full size of the buffer (i.e., 64 bytes in this examples), is not fully utilised before the buffer is drained and the data is sent downstream. A buffer may be drained (i.e., the data is removed from the buffer and written downstream) for a number of reasons based on the data that is stored in the partition. This includes: when the buffer is full, when a time-out expires (to ensure that the data stores are observed in a timely manner), when a fence instruction or other instruction with 'release' semantics is called that orders older memory operations, or when there is a load hazard on a waiting write buffer. Furthermore, a buffer may be drained if all buffers (e.g., all of buffers 201, 203, 205, 207) are in use (i.e., have data written to them) and further data is received that is associated with an address that is not already associated with one of the buffers. In this scenario, the buffer with the oldest data (i.e., has held the data for the longest period of time) may be drained first, to allow the further data to be written to one of the buffers. Hardware of the processor 200 may maintained the age of the data in each of the buffers. The writes to the buffers are stores to a memory, which means that when a load/read happens to a same address for which a store/write was previously issued, then this results in a load hazard against a (data) store.

As the maximum size of blocks of data is 16 bytes in this example, and many of the blocks are smaller than 16 bytes in size (e.g., 8 bytes), this means that the buffers 201, 203, 205, 207 are not being filled in a quick manner. It is likely that a time-out would expire before each of the buffers in filled in data. This means that the draining (writes out of the buffer) would only be a partial size of the total buffer size. In this manner, the 'real estate' of the buffers is not being utilised efficiently. Furthermore, as the buffers may not fill before the time-out expires, this means that there will be frequent delays in the writes downstream because the draining of the buffers is unlikely to occur due to a filling of the buffer.

One or more of the problems identified above are addressed in one or more of the examples described below.

In examples, there is provided a processor (e.g., a CPU) comprising: a data buffer, the data buffer being configured as a write-combine buffer, and logic circuitry. The logic circuitry is configured to perform: receiving, from a further entity, an input data stream for a write operation, wherein the input data stream is received in blocks of data; partitioning the data buffer into partitions, wherein the partitioning is based on a size of the blocks of data that are received; writing each of the blocks of data to one of the partitions, each block of data being written to a partition of the data buffer based on an address associated with the respective block of data; and for each of the partitions, determining whether to initiate a draining of the respective partition to further memory based on the data that is stored in the respective partition.

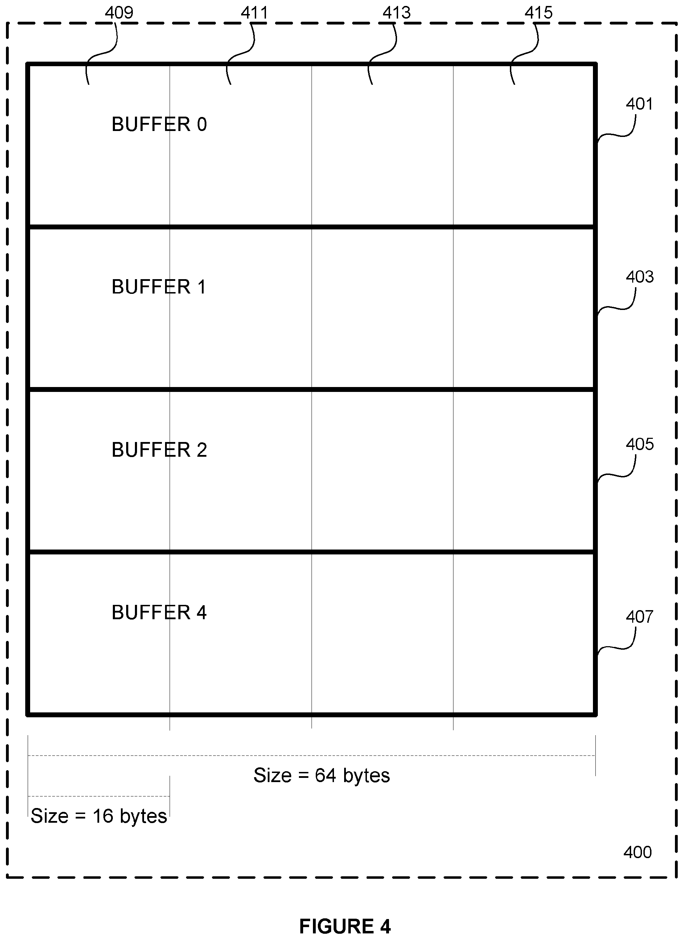

An example which shows a buffer that has been partitioned is depicted in Figure 4.

Figure 4 shows a schematic representation of data buffers which are comprised in a processor, wherein the data buffers have been partitioned. The (data) buffers in Figure 4 may be configured as write-combine (WC) buffers.

A processor 400 (e.g., a CPU) comprises four (data) buffers. The four buffers include: a first buffer (labelled 'buffer 0') 401, a second buffer (labelled 'buffer 1') 403, a third buffer (labelled 'buffer 2') 405, and a fourth buffer (labelled 'buffer 3') 407. Each of the four buffers 401, 403, 405, 407 are 64 bytes in size. It should be understood that this size of buffer is an example only. In other examples, each of the four buffers 401, 403, 405, 407 may be larger, or smaller, than 64 bytes. Furthermore, the number of buffers (e.g., 4 in this example) in the processor 400 is also an example. The four buffers 401, 403, 405, 407 may be comprised in memory in HW that is associated with a cache memory (not shown) of the processor 400. For example, the HW cache memory may be part of an L1 memory system of the processor 400. The four buffers 401, 403, 405, 407 may be comprised in a BIU of the HW cache memory (e.g., similar to the BIU 109 of Figure 1). In other examples, the HW cache memory may be part of an L2, L3, etc. memory system.

The four buffers 401, 403,405, 407 may each be considered to have a width. The width is a (micro) architectural width in hardware within the processor. Each of the four buffers 401, 403,405, 407 may be considered to be a row (in HW). In this manner, each of the four buffers 401, 403,405, 407 are a row, with each of the four buffers 401, 403,405, 407 having an architecturally defined width. Each of the four buffers 401, 403,405, 407 has a fixed size in memory. The fixed size of the buffer 401, 403,405, 407 is determined at the micro architectural level, and may be derived from at least one of: a bus size associated with the processor 400, or burst beats, so that a full cache line worth of data may be drained from the buffer. A (burst) beat in a burst transfer is the number of write (or read) transfers, from master to slave, that takes place continuously in a transaction. In a burst transfer, the address for a write or a read transfer is an incremental value of a previous address. The fixed size of the buffer 401, 403,405, 407 will be a trade-off with available hardware area. Each of the four buffers 401, 403,405, 407 is associated with a (single) address at any given time (e.g., buffer 0 = address A, buffer 1 = address B, buffer 2 = address C, buffer 3 = address D).

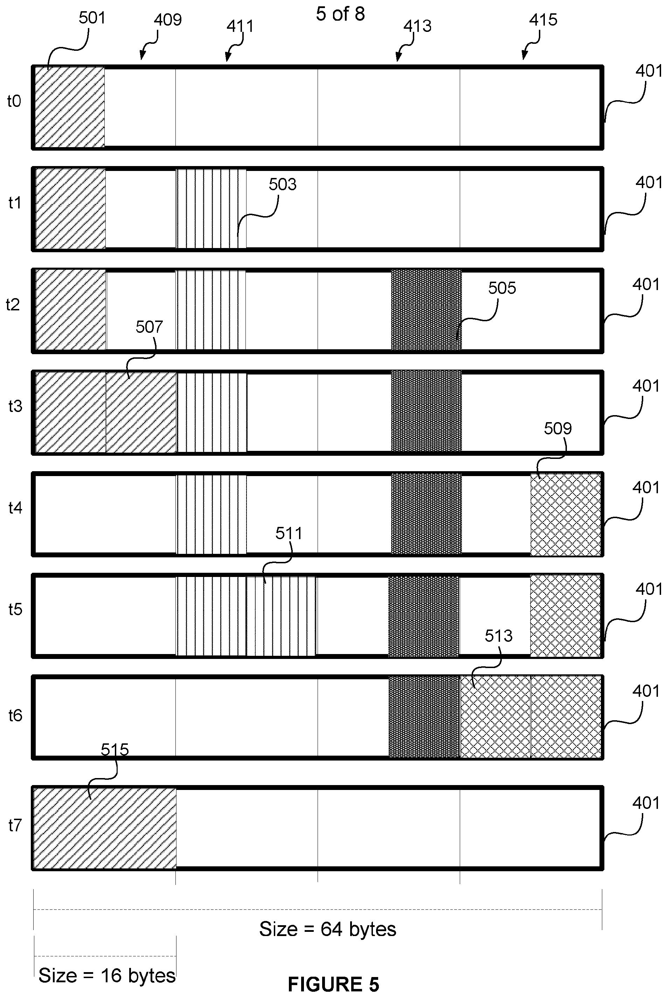

As described above, certain types of data may be suitable for write combining in buffers, such as one of the four buffers 401, 403, 405, 407. For example, idempotent data, or uncacheable data (that is non-device type), is suitable for write combining. Since a write operation for idempotent or other uncacheable data is a non-cacheable transaction for L1 (or L2, L3, etc.) it will not be cached in an L1 memory cache. Instead, the data is stored (e.g., in one of the four buffers 401, 403, 405, 407), merged (combined) and then written to further memory (e.g., written to downstream memory). Data being cacheable or uncacheable is based on the address that is associated with the data. This is because address regions (which are being written to using the address) are mapped as uncacheable or cacheable. An example operation is described in more detail below alongside Figure 5.

As depicted in Figure 4, each of the four buffers 401, 403, 405, 407 have been partitioned into (separate) partitions. For the first buffer 401, the total (fixed) size of 64 bytes has been partitioned into 4 partitions of 16 bytes. There is a first partition 409, a second partition 411, a third 413, and a fourth partition 415. The partitions 409, 411, 413, 415 may be referred to as 'sections', 'sub-blocks', 'sub-buffers', or any other suitable name. The first buffer 401 (and the other buffers 403, 405, 407) is partitioned in hardware. For example, the each of the four buffers 401, 403, 405, 407 is partitioned in hardware based on software (of the processor 400) configuring a register in hardware based on an incoming data stream (e.g., the width of the incoming data stream per cache line). Each partition 409, 411, 413, 415 is a memory division of the total buffer size (e.g., a division of the 64 bytes of the first buffer 401). As described above, each of the four buffers 401, 403,405, 407 may be considered to have a width in the architecture of the processor (in HW). For the partitioning, the width of each of the four buffers 401, 403,405, 407 may be partitioned.

Each of the partitions 409, 411, 413, 415 is able to store data and merge data for a different address (or different cache line). In this manner, the four partitions 409, 411, 413, 415 are able to merge data for four different addresses (or four different cache lines). This in effect quadruples the buffer utilisation and increases throughput, due to the additional merge options (i.e., when all of the four buffers 401, 403,405, 407 are partitioned, there are now partitions associated with 16 different addresses).

The partitioning of the four buffers 401, 403, 405, 407 is based on input data (or an input data stream) that is to be written to the buffers 401, 403, 405, 407. The partitioning may be based on one or more characteristics of the input data. The processor 400 receives data from an external entity to the processor (e.g., an accelerator or GPU). The data generated by the external entity which is sent towards the processor 400, is determined by the processor 400 as being suitable for write combining in any of the four buffers 401, 403, 405, 407. The data that is received from the external entity is received in a block of data (or chunks of data). There is a maximum size of block that the external entity will send to the processor 400. The processor 400 may partition the buffers 401, 403, 405, 407 based on the maximum size of block. For example, when the maximum size of block being received in 16 bytes, then at least one of four buffers 401, 403, 405, 407 is partitioned into 16 byte partitions. This is depicted in Figure 4. In this manner, the buffers are partitioned to match the size of the maximum size of block being received. In this context, the 'size' is a size of memory (e.g., in bits, bytes, etc).

The maximum size of block being received may be determined by SW of the processor 400. The processor 400 may comprise execution logic comprising one or more execution units for running SW. The SW may detect the maximum size of block being received and provide information related to the maximum size to logic circuitry of the processor 400 that is for partitioning the buffers 401, 403, 405, 407. The SW may detect the maximum size of block based on communication between the external entity (e.g., accelerator, or GPU) and the SW of the processor, about the input stream that the external entity is going to send, or is currently sending. Registers of the processor 400 may be programmed by the SW based on the interaction between the SW and the external entity about the size of the incoming transactions. HW of the processor 400 will be sent (or retrieve) this information from the register. In other examples, the input data stream may comprise a flag (or any other indication) that indicates the maximum size of block. Hardware (e.g., an execution engine) of the processor may identify the flag and provide information related to the maximum size to logic circuitry of the processor 400 that is for partitioning the buffers 401, 403, 405, 407. The flag may be encoded into the input stream by the external entity (e.g., accelerator) that sends the data stream to the processor. In one example, the information (e.g., the flag) may be encoded with a store instruction on the reduced instruction set computer-V (RISC-V) instruction set architecture (ISA), for example. The information can then be decoded by the HW (e.g., execution engine) of the processor and passed to the logic circuitry. In another example, there can be a custom (or specific) store instruction from the external entity to the processor 400, wherein the (custom) store instruction indicates the maximum size of block. In some examples, the logic circuitry identifies (or detects) the flag, and determines the information about the maximum size of block.

The logic circuitry of the processor 400 may then partition the buffers 401, 403, 405, 407 based on the information. Stated differently, for the logic circuitry (which may reside in HW in the BIU of the processor 400), the SW provides the information about the data stream, and the HW uses this information to efficiently utilize the real estate of the buffers 401, 403, 405, 407.

In this example, each of the four buffers 401, 403, 405, 407 have been partitioned into 4 x 16 bytes partitions. In other examples, the partitioning may be different between the four buffers 401, 403, 405, 407. For example, the second buffer may partition into 2 x 32 byte partitions. In some examples, the size of the partitions 409, 411, 413, 415 is dynamically changed over time. Stated differently, the buffers may be partitioned while the processor 400 is in use, such that the size of the partitions may be dynamically configured. The logic circuitry of the processor 400 may change the size of the partitions 409, 411, 413, 415 when the input data (or input data stream) changes. The logic circuitry may change the size of the partitions 409, 411, 413, 415 following a flush of the first buffer 401 (i.e., when there is no data written to the buffer) (not shown in FIG. 4). The size of the partitions 409, 411, 413, 415 in the first buffer 401 may be changed after each transaction. In this context, a transaction may be considered to be a batch (or group, or amount) of data that is sent from the external entity at different instances in time. Each batch of data that is sent to the processor, from the external entity, targets a block of a memory region. For example, in a first transaction, the external entity may send one batch of data (e.g., a chunk of data to different cache lines within a region of memory) the processor 400 at a first time. Subsequently, in a second transaction, the external entity may send a further batch of data at a second time, wherein both batches may be sent to the same region in memory, or a different region of memory. The size of the partitions 409, 411, 413, 415 in the first buffer 401 may be changed between the first and the second transactions. The change of the size of the partitions 409, 411, 413, 415 may happen when a drain operation is triggered based on a fence instruction of a release semantics operation is run/called.

An example showing how the partitions 409, 411, 413, 415 of the first buffer 401 may be filled with data over time is depicted in Figure 5.

Figure 5 shows a schematic representation of the filling of the first buffer of Figure 4 with data over time. Common labelling is used between Figures 4 and 5 for the parts that are the same.

The processor 400 receives data from the external entity. For example, the processor 400 may receive data from an accelerator or graphics processing unit (GPU). The data being received from the external entity will be received in blocks of data. As discussed above, alongside Figure 4, in this example the maximum size of block is 16 bytes. It should be understood that a block of 16 bytes is an example only, and may be higher, or lower, than 16 bytes.

At time 0 (t0), a first block of data 501 is to be inserted (or written) into one of the four partitions 409, 411, 413, 415 of the first buffer 401. The first block of data 501 is associated with an address A. The first block of data 501 is 8 bytes (i.e., smaller than the maximum block size). In this example, the first partition 409 of the first buffer 401 becomes associated with address A. Therefore, the first block of data 501 is written to the first partition 409. The first partition 409 now comprises 8 bytes of (valid) data.

The first partition 409 may be considered to have a 'lower' 8 bytes, and a 'higher' 8 bytes within the 16 byte partition. The first block of data 501 may be written to the lower 8 bytes of the first partition 409. This write operation may be expressed as: cache line (address) A writes lower 8 bytes to the first partition 409 (with the first block of data 501).

At t1, a second block of data 503 is to be inserted (or written) into one of the four partitions 409, 411, 413, 415 of the first buffer 401. The second block of data 503 is associated with an address B. The second block of data 503 is 8 bytes. In this example, the second partition 411 of the first buffer 401 becomes associated with address B. Therefore, the second block of data 503 is written to the second partition 411. The second partition 411 now comprises 8 bytes of (valid) data. This write operation may be expressed as: cache line (address) B writes lower 8 bytes to the second partition 411 (with the second block of data 503).

At t2, a third block of data 505 is to be inserted (or written) into one of the four partitions 409, 411, 413, 415 of the first buffer 401. The third block of data 505 is associated with an address C. The third block of data 505 is 8 bytes. In this example, the third partition 413 of the first buffer 401 becomes associated with address C. Therefore, the third block of data 505 is written to the third partition 413. The third partition 413 now comprises 8 bytes of (valid) data. This write operation may be expressed as: cache line (address) C writes higher 8 bytes to the third partition 413 (with the third block of data 505).

At t3, a fourth block of data 507 is to be inserted (or written) into one of the four partitions 409, 411, 413, 415 of the first buffer 401. The fourth block of data 507 is associated with address A. The fourth block of data 507 is 8 bytes (i.e., smaller than the maximum block size). In this example, the first partition 409 of the first buffer 401 is already associated with address A. Therefore, the fourth block of data 507 is written to the first partition 409. This write operation may be expressed as: cache line (address) A writes higher 8 bytes to the first partition 409 (with the fourth block of data 507).The first partition 409 is now full (i.e., is holding 16 bytes of data).

As the first partition 409 is full, the first partition 409 drains to further memory (e.g., downstream memory). The draining of the data from the first partition 409 is based on the address associated with the data/partition (e.g., the first partition 409 is associated with address A, which means that the location that the data is drained to in the further memory is based on address A). The draining of a partition may be immediately initiated based on a drain criteria being met (e.g., partition is filled, or time-out). One the draining has been initiated, the partition would be free for allocation again when a protocol interface between L1 memory (or other processor memory) and the downstream memory is free and a handshake between transmitter (e.g., buffer in the processor) and receiver (e.g., downstream memory) is complete (e.g., write request and acknowledge). The draining of the data from the buffer may be in a bus transaction (in burst mode). The downstream memory may be comprised within the processor 400, or external to the processor 400. The downstream memory is non-cache memory, e.g., double date rate (DDR) memory, main memory, a hard-disk drive, solid state memory, etc. In this manner, the first buffer 401 is configured to drain when a partition is full, rather than waiting until the whole of the buffer is full. This enables a faster draining, which would be particularly efficient when the input data being received is with a small block size and/or at a low data rate.

At t4, the first partition 409 has drained (the data has been written down stream), and a fifth block of data 509 is to be inserted (or written) into one of the four partitions 409, 411, 413, 415 of the first buffer 401. The fifth block of data 509 is associated with an address D The fifth block of data 509 is 8 bytes. In this example, the fourth partition 415 of the first buffer 401 becomes associated with address D. Therefore, the fifth block of data 509 is written to the fourth partition 415. The fourth partition 415 now comprises 8 bytes of (valid) data. This write operation may be expressed as: cache line (address) D writes higher 8 bytes to the fourth partition 415 (with the fifth block of data 509).

At t5, a sixth block of data 511 is to be inserted (or written) into one of the four partitions 409, 411, 413, 415 of the first buffer 401. The sixth block of data 511 is associated with address B. The sixth block of data 511 is 8 bytes. In this example, the second partition 411 of the first buffer 401 is already associated with address B. Therefore, the sixth block of data 511 is written to the second partition 411. The second partition 411 now comprises 16 bytes of (valid) data. This write operation may be expressed as: cache line (address) B writes higher 8 bytes to the second partition 411 (with the sixth block of data 511). A drain is initiated for the second partition 411 of the first buffer 401, due to the second partition 411 being full. The (merged) data will be written downstream.

At t6, the second partition 411 has drained (the data has been written down stream), and a seventh block of data 513 is to be inserted (or written) into one of the four partitions 409, 411, 413, 415 of the first buffer 401. The seventh block of data 513 is associated with an address D. The seventh block of data 513 is 8 bytes. In this example, the fourth partition 415 of the first buffer 401 is already associated with address D. Therefore, the seventh block of data 513 is written to the fourth partition 415. The fourth partition 415 now comprises 16 bytes of (valid) data. This write operation may be expressed as: cache line (address) D writes lower 8 bytes to the fourth partition 415 (with the seventh block of data 513).

A drain is initiated for the fourth partition 415 of the first buffer 401, due to the fourth partition 415 being full. The (merged) data will be written downstream. A time-out has also expired for the data in the third partition 413. The time-out is a timer (or similar) that is initiated when data is first written to a partition. When the time-out expires, the partition is to be drained to downstream memory. In other words, in this scenario, the draining of the partition is initiated based on the length of time the data has been stored in the partition. The length of time that the data has been stored in each partition may be monitored (or tracked) by HW of the processor 400. When a partition is drained due to the partition being fill (or any other reason), then the time-out is reset. The time-out is used to ensure that there are no excessive delays in memory write operations. It should be understood that the duration of the time-out in Figure 5 is shown as an example only. The time-out may be longer, or shorter, in other examples.

At t7, the fourth partition 415 has drained due to the partition being filled, and the third partition 413 has drained due to a time-out expiry. At t7, an eighth block of data 515 is to be inserted (or written) into one of the four partitions 409, 411, 413, 415 of the first buffer 401. The eighth block of data 515 is associated with address A. The eight block of data 515 is 16 bytes (i.e., the maximum block size). In this example, the first partition 409 of the first buffer 401 becomes associated with address A. Therefore, the eighth block of data 515 is written to the first partition 409. This write operation may be expressed as: cache line (address) A writes 16 bytes to the first partition 409 (with the eighth block of data 515).The first partition 409 is now full (i.e., is holding 16 bytes of data). Due to the first partition 409 being filled, a draining will be initiated. In other examples, the eighth block of data 515 may have been associated with an address E. As address E is not associated with any of the other partitions, and the first partition 409 has been drained, then the first partition 409 may become associated with address E. This would mean that the eighth block of data 515 would be written to the first partition 409.

In the example of Figure 5, one or more of the partitions were drained due to the partition filling, or a time-out expiring. In other examples, the partition may be drained for other suitable reasons. In the processor 400, (draining) logic circuitry may drain a partition when one of: a full amount of data is written to the partition to fill the partition (e.g., 16 bytes of data received to fill a 16 byte partition), when a time-out occurs (the duration of a time-out may be scaled down from what is set for a 'full' buffer (before partitioning), e.g., the time-out may be quarter of the duration if the buffer has been partitioned into four), when a fence or instruction with release semantics is called which orders older memory operations, or when there is a load hazard on a waiting write buffer.

In some examples, a threshold for draining (also referred to as a drain threshold) may be configured for one or more the partitions 409, 411, 413, 415. The drain threshold may be configured in SW registers in the processor 400. A drain threshold sets an amount/size of data (e.g., in bytes), for a partition, that may be stored in the partition before the partition should be drained. Stated differently, a partition may be configured with a drain threshold, such that the partition is configured to drain before the whole partition is filled (based on the drain threshold). For example, when the buffer partition sizes are configured to be 16 bytes, but data sizes of 8 bytes (only) are going to be sent from the external entity, and when the input stream does not require merging but simply needs to be drained, then a drain threshold to drain the buffer after 8 bytes are filled may be initiated/configured. The drain threshold may be configured for a partition when it is known that the input stream does not require merging. For example, if the partition size is set to 16 bytes but the drain threshold is set to 8 bytes, then the lower 8 bytes and upper 8 bytes will not be merged in the partition.

As described above, the partitioning of the WC buffer into partitions based on the size of the input data improves the performance of the processor. The transfer (or writing) of idempotent/ uncacheable stores from the processor to downstream is increased. By configuring the size of the partitions in the WC buffers dynamically (e.g., using SW programming) based on the input data stream sent by the accelerator/GPU, this enables a faster drain of the buffer (e.g., as a drain threshold may be adjusted based on a register configuration). Furthermore, by utilising the existing real estate of the buffers for write combining, the combining of multiple smaller-sized bytes for different lines enables the handling of more merging of lines.

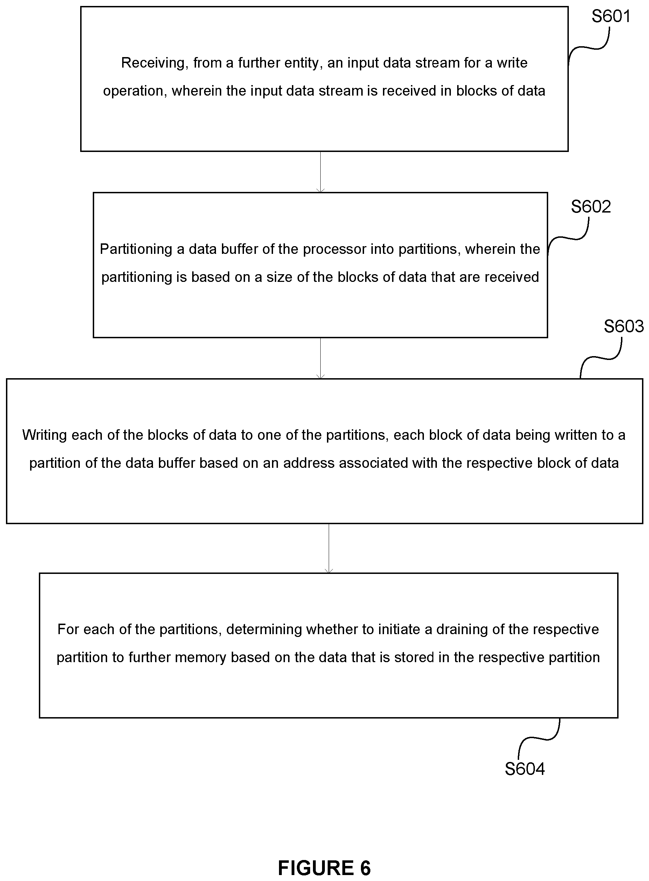

Figure 6 shows an example method performed by a processor. For example, the processor may be a CPU.

At S601, the method comprises: receiving, from a further entity, an input data stream for a write operation, wherein the input data stream is received in blocks of data.

At S602, the method comprises: partitioning a data buffer of the processor into partitions, wherein the partitioning is based on a size of the blocks of data that are received.

At S603, the method comprises: writing each of the blocks of data to one of the partitions, each block of data being written to a partition of the data buffer based on an address associated with the respective block of data; and

At S604, the method comprises: for each of the partitions, determining whether to initiate a draining of the respective partition to further memory based on the data that is stored in the respective partition.

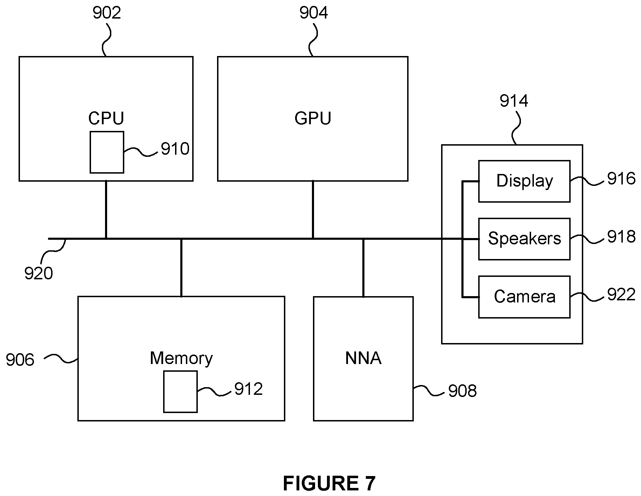

Figure 7 shows a computer system in which processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 (e.g., similar to the logic 101, 103 comprised in the processor 100 of Figure 1) is implemented on the CPU 902. In other examples, one or more of the depicted components may be omitted from the system, and/or the processing block 910 may be implemented on the GPU 904 or within the NNA 908. The components of the computer system can communicate with each other via a communications bus 920. A store 912 (e.g., similar to the memory 105, 107 comprised in the processor 100 of Figure 1) is implemented as part of the memory 906.

The processors of Figures 1 to 5 are shown as comprising a number of functional blocks. This is schematic only and is not intended to define a strict division between different logic elements of such entities. Each functional block may be provided in any suitable manner.

The processors described herein may be embodied in hardware on an integrated circuit. The processors described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processor configured to perform any of the methods described herein, or to manufacture a processor comprising any apparatus described herein. An integrated circuit definition dataset may be, for example, an integrated circuit description.

Therefore, there may be provided a method of manufacturing, at an integrated circuit manufacturing system, a processor as described herein. Furthermore, there may be provided an integrated circuit definition dataset that, when processed in an integrated circuit manufacturing system, causes the method of manufacturing a processor to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

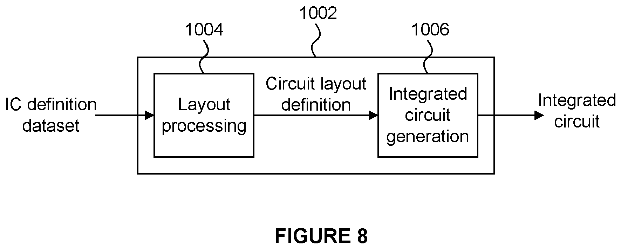

An example of processing an integrated circuit definition dataset at an integrated circuit manufacturing system so as to configure the system to manufacture a processor will now be described with respect to Figure 8.

Figure 8 shows an example of an integrated circuit (IC) manufacturing system 1002 which is configured to manufacture a processor as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processor as described in any of the examples herein), process the IC definition dataset, and generate an IC according to the IC definition dataset (e.g. which embodies a processor as described in any of the examples herein). The processing of the IC definition dataset configures the IC manufacturing system 1002 to manufacture an integrated circuit embodying a processor as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processor without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 8 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 8, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A processor comprising:
a data buffer, the data buffer being configured as a write-combine buffer; and
logic circuitry configured to perform:
receiving, from a further entity, an input data stream for a write operation, wherein the input data stream is received in blocks of data;
partitioning the data buffer into partitions, wherein the partitioning is based on a size of the blocks of data that are received;
writing each of the blocks of data to one of the partitions, each block of data being written to a partition of the data buffer based on an address associated with the respective block of data; and
for each of the partitions, determining whether to initiate a draining of the respective partition to further memory based on the data that is stored in the respective partition.

2. The processor according to claim 1, wherein the input data stream comprises an idempotent store of data, wherein the idempotent store of data is un-cacheable.

3. The processor according to claim 1 or claim 2, wherein the partitioning is based on a maximum size of the blocks of data that are received.

4. The processor according to claim 3, wherein a size of the partitions in the data buffer is configured to match the maximum size of the blocks of data that are received.

5. The processor according to claim 3 or claim 4, further comprising:
execution logic circuitry comprising one or more execution units for running software,
wherein the software: detects the maximum size of the blocks of data in the input data stream, and sends an indication of the maximum size to the logic circuitry,
wherein the logic circuitry is configured to use the indication to partition the data buffer.

6. The processor according to any of claims 1 to 4, wherein the logic circuitry is configured to perform: identifying a flag that is comprised within the input data stream that indicates the maximum size of the blocks of data, wherein the logic circuitry is configured to use the flag to partition the data buffer.

7. The processor according to any of claims 1 to 6, wherein the logic circuitry is configured to perform: draining one of the partitions to further memory in response to the one of the partitions being filled with data.

8. The processor according to any of claims 1 to 7, wherein the logic circuitry is configured to perform: draining one of the partitions to further memory in response to a time-out expiring for the one of the partitions.

9. The processor according to claim 7 or claim 8, wherein the one of the partitions of the data buffer is drained to the further memory in a bus transaction in a burst mode.

10. The processor according to any of claims 1 to 9, wherein the logic circuitry is configured to perform at least one of:
dynamically change the size of the partitions, while the processor is in use, based on the size of the blocks of data that are received; or
merging at least two blocks of data within one of the partitions before the data in the partition is drained to the further memory.

11. The processor according to any of claims 1 to 10, wherein each of the blocks of data is written to one of the partitions in response to the logic circuitry determining that the input data stream comprises an idempotent store, wherein the determining is based on the address that is associated with the respective block of data.

12. The processor according to any of claims 1 to 11, wherein at least one of:
the data buffer is comprised in a bus interface unit of the processor, wherein the bus interface unit is associated with a cache memory of the processor, the cache memory comprised in a level-1 memory system of the processor;
each of the partitions is associated with an address that is different from each other, the data being written to each of the partitions in dependence on the associated address; or
the further entity is one of: an accelerator, or a graphics processing unit.

13. A method performed by a processor, the method comprising:
receiving, from a further entity, an input data stream for a write operation, wherein the input data stream is received in blocks of data;
partitioning a data buffer of the processor into partitions, wherein the partitioning is based on a size of the blocks of data that are received;
writing each of the blocks of data to one of the partitions, each block of data being written to a partition of the data buffer based on an address associated with the respective block of data; and
for each of the partitions, determining whether to initiate a draining of the respective partition to further memory based on the data that is stored in the respective partition.

14. A method of manufacturing, using an integrated circuit manufacturing system, a processor as claimed in any of claims 1 to 12.

15. Computer readable code configured to cause the method of claim 13 to be performed when the code is run.
